(19) Europäisches Patentamt
European Patent Office
Office européen des brevets

(11) **EP 4 779 396 A1**

(12) **EUROPEAN PATENT APPLICATION**

(43) Date of publication:
**22.07.2026 Bulletin 2026/30**

(21) Application number: **25206157.7**

(22) Date of filing: **01.10.2025**

(51) International Patent Classification (IPC):
**G02F 1/03** (2006.01)     **G02F 1/035** (2006.01)
**G02F 1/225** (2006.01)

(52) Cooperative Patent Classification (CPC):
**G02F 1/0316; G02F 1/035; G02F 1/2255**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.10.2024 GB 202414626**

(71) Applicant: **LiGenTec SA
1024 Ecublens VD (CH)**

(72) Inventors:
• **Op de Beeck, Camiel
9000 Gent (BE)**
• **Valdez, Forrest
1007 Lausanne (CH)**

• **Mere, Viphretuo
1023 Crissier (CH)**
• **Buriakova, Tatiana
Chavannes-près-Renens (CH)**
• **Wuytens, Pieter
1006 Lausanne (CH)**

(74) Representative: **Piotrowicz, Pawel Jan Andrzej et al
Venner Shipley LLP
406 Cambridge Science Park
Milton Road
Cambridge CB4 0WW (GB)**

Remarks:
Claims 18,19,22-25 are deemed to be abandoned
due to non-payment of the claims fees (Rule 45(3)
EPC).

(54) **MODULATOR**

(57)     A hybrid electro-optic modulator is described. The modulator comprises an electro-optic layer configured to support a hybrid mode propagating in a first direction, a pair of electrodes spaced apart in a second direction perpendicular to the first direction, the electrodes being positioned on the same side of the electro-optic layer and between the propagation path of the hybrid mode, wherein each electrode has a cross-sectional shape in a plane defined by the second direction and a third direction perpendicular to the first and second directions, the cross-sectional shape including a lower region joined to an elevated region via an angled region. The lower region is closer to the electro-optic layer than the elevated region in the third direction, the angled region extends towards the propagation path of the hybrid mode in the second direction, and the pair of elevated regions are closer than the pair of lower regions in the second direction.

Fig. 1

## Description

## Technical Field

The present invention relates to a hybrid electro-optic modulator, and methods of forming the hybrid electro-optic modulator.

## Background

An electro-optic modulator is an optical device in which physical properties of a beam of light or a guided mode of light are modulated in response to an electric signal. Examples of physical properties of light include phase, amplitude or polarization. Hybrid electro-optic modulators are important photonic devices in various fields, such as high-speed optical fibre communications.

Weigel, P. O., Valdez, F., Zhao, J., Li, H., & Mookherjea, S. (2021). "Design of high-bandwidth, low-voltage and low-loss hybrid lithium niobate electro-optic modulators." Journal of Physics: Photonics, 3(1), 012001, describes the state-of-the-art in thin film modulator technology and presents a simplified simulation technique for quickly optimizing a hybrid silicon or silicon nitride-lithium niobate modulator.

There is a challenge to provide hybrid electro-optic modulators with low optical loss without reducing their efficiency.

## Summary

According to a first aspect of the present invention, there is provided a hybrid electro-optic modulator comprising: an electro-optic layer configured to support a hybrid mode propagating in a first direction, a pair of electrodes spaced apart in a second direction perpendicular to the first direction, the electrodes being positioned on the same side of the electro-optic layer and between the propagation path of the hybrid mode, wherein each electrode has a cross-sectional shape in a plane defined by the second direction and a third direction perpendicular to the first and second directions, the cross-sectional shape including a lower region joined to an elevated region via an angled region. The lower region is closer to the electro-optic layer than the elevated region in the third direction, the angled region extends towards the propagation path of the hybrid mode in the second direction, and the pair of elevated regions are closer than the pair of lower regions in the second direction.

Thus, the absorption of the optical mode by the electrodes is minimised whilst the electric field between the electrodes is enhanced.

The lower region may directly contact the electro-optic layer.

The modulator may further comprise an electrode layer provided between each electrode and the electro-optic layer, wherein the electrode layer conforms to the profile of the cross-sectional shape.

The electrode layer may comprise two rows of tips, one row extending along the first direction and the other row extending opposite to the first direction.

Each tip may be T-shaped.

The electrode layer may be formed of titanium nitride, TiN.

The electrode layer may be formed of a transparent conductive oxide.

The transparent conductive oxide may be hydrogenated indium oxide, IO:H, indium tungsten oxide, IWO, aluminium doped zinc oxide, AZO, boron doped zinc oxide, BZO, or indium zinc oxide, IZO, or alloys thereof.

The electro-optic layer may be formed of lithium niobate.

The electro-optic layer may be formed of thin film lithium niobate.

The lithium niobate may be in the X-cut orientation.

The electro-optic layer may be formed of barium titanate, BTO, lead zirconate titanate, PZT, lithium tantalate, LT, or aluminium nitride, AIN.

The pair of electrodes may be formed of aluminium.

The pair of electrodes may be formed of gold, Au, silver, Ag, indium tin oxide, ITO, zinc oxide, ZnO, tungsten, W, or niobium, Nb.

The spacing between the lower regions of the pair of electrodes may be set according to the effective area, $A_{eff}$, of the hybrid mode.

The spacing between the lower regions may be greater than $5w_{eff}$, wherein $w_{eff}$ is the effective width of the hybrid mode.

Each electrode may have a thickness from 0.7 um to 1.5 um.

The height of each electrode may be set according to the effective area, $A_{eff}$, of the hybrid mode, wherein the height is measured from the bottom of the lower region to the bottom of the elevated region along the third direction.

Each electrode may have a height from 0.1 um to 2.0 um.

The height of each electrode may be greater than $w_{eff}/3$, wherein $w_{eff}$ is the effective width of the hybrid mode.

The effective width, $w_{eff}$, of the hybrid mode may be defined as:

$$w_{eff} = 2\sqrt{\frac{A_{eff}}{2}}$$

The effective area, $A_{eff}$, of the hybrid mode may be defined as:

$$A_{eff} = \frac{(\int |E|^2 \, \delta A)^2}{\int |E|^4 \delta A}$$

Wherein E is the electric field component of the hybrid mode.

The lower region may extend across the electro-optic layer over a length in the second direction from 0.1 um to 200 um and over a length in the first direction from 0.2 mm to 20 mm.

Wherein the angled region is a first angled region and the elevated region is a first elevated region, the cross-sectional shape may further comprise a second elevated region joined to the lower region via a second angled region, wherein the second angled region extends away from the propagation path of the hybrid mode in the second direction.

The cross-sectional shape may be V-shaped.

The angled region may have two angled edges, each angled edge having a straight, curved, or stepped profile.

The two angled edges may both have a straight profile.

The angled region may have one straight edge and one angled edge.

The angled region may be angled with respect to the electro-optic layer by up to 89°.

Each elevated region may include a side of the cross-sectional shape which has a bevelled profile and faces the other elevated region.

According to a second aspect of the present invention, there is provided a method of forming a hybrid electro-optic modulator. The method comprises: providing an electro-optic layer on a wafer, providing an initial cladding layer on the electro-optic layer, etching the initial cladding layer to form one or more holes, each hole having two angled side walls and exposing a region of the electro-optic layer, forming an electrode in each hole such that the electrode overlays at least one angled side wall, the exposed region of the electro-optic layer, and a region of the first cladding layer surrounding the hole, and providing a final cladding layer on the electrode(s) and the initial cladding layer.

The electrode may overlay both angled side walls of the hole.

The electrode may directly contact at least one angled side wall, the exposed region of the electro-optic layer, and the region of the first cladding layer surrounding the hole.

An electrode layer may be formed with the electrode or immediately prior to forming the electrode in each hole.

The electrode layer may directly contact at least one angled side wall, the exposed region of the electro-optic layer, and the region of the first cladding layer surrounding the hole.

The initial cladding layer may be etched using a single lithographic mask.

Each angled side wall may have a straight, curved, or stepped profile.

The electrodes may be formed using the lift-off method or the Damascene method.

The electrodes may be formed by applying a metal underlay, then depositing and selectively etching the electrodes against the metal underlay. The electrodes may be etched using dry and/or wet etching.

## Brief Description of Drawings

Certain embodiments of the present invention will now be described, by way of example, with reference to the accompanying drawings in which:

Figure 1 schematically illustrates a cross-sectional view of a modulator;
Figure 2 schematically illustrates a cross-sectional view of a modulator;
Figure 3 schematically illustrates a cross-sectional view of a modulator;
Figure 4a schematically illustrates a cross-sectional view of a modulator;
Figure 4b schematically illustrates an aerial view of a section of an electrode;
Figure 5 schematically illustrates a cross-sectional view of a section of a modulator;
Figure 6 shows a process flow diagram of a method of forming a modulator;
Figures 7a to 7d schematically illustrate stages of forming a modulator;
Figure 8a shows a simulation of an electric field of a modulator;
Figure 8b shows a simulation of an electric field of a conventional modulator;
Figure 8c shows a simulation of an electric field of a modulator;
Figure 9a shows simulation plots of modulator optical loss against half-wave voltage-length product; and
Figure 9b shows simulation plots of modulator optical loss against half-wave voltage-length product.

## Detailed Description of Certain Embodiments

In the following, like parts are denoted by like references.

Optical losses can occur in hybrid electro-optic modulators due to a failure to laterally confine the hybrid mode. The present application is concerned with an electro-optic modulator which can help to minimise the absorption of the optical mode by the electrodes whilst enhancing the electric field between the electrodes.

As used herein, the term "hybrid electro-optic modulator" is used to refer any optical device in which a hybrid mode of light is modulated in response to an electric signal by exploiting the Pockels effect.

## Hybrid electro-optic modulator

Several hybrid electro-optic modulators according to the present application will now be described.

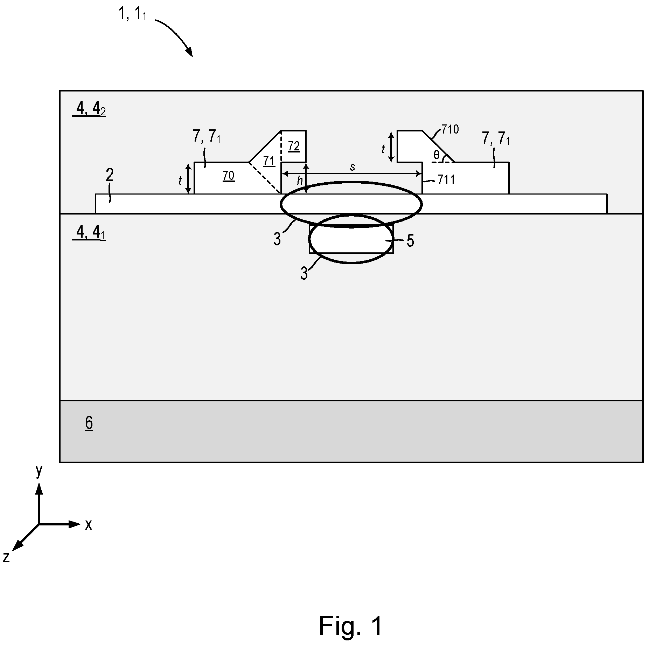

Referring to Figure 1, a first hybrid electro-optic modulator 1, $1_1$ (herein "first modulator") is shown. The first modulator $1_1$ comprises an electro-optic layer 2 which is configured to support a hybrid mode 3. The extent of the hybrid mode 3 is indicated by the circles in Figure 1.

Figure 1 shows a cross-sectional view of the first modulator $1_1$ in the x-y plane. Thus, in Figure 1, the direction of propagation (herein "propagation path") of the hybrid mode 3 is along the z axis.

Preferably, the electro-optic layer 2 is formed of lithium niobate (such as thin film lithium niobate) in the X-cut orientation. However, the electro-optic layer 2 may be formed of any appropriate electro-optical material, such as barium titanate, BTO, lead zirconate titanate, PZT, lithium tantalate, LT, and aluminium nitride, AIN, and variations thereof which have been intentionally doped with other elements.

The first modulator $1_1$ may have any appropriate waveguide configuration according to its intended use. In the example shown in Figure 1, the electro-optic layer 2 is provided on a first cladding layer 4, $4_1$ into which is embedded a hybrid waveguide 5. As shown in Figure 1, the hybrid waveguide 5 is configured to support the hybrid mode 3 by providing lateral confinement of the mode 3 through its close proximity to the electro-optic layer 2. The hybrid waveguide 5 may directly contact the electro-optic layer 2. In other examples, the hybrid waveguide 5 may be spaced apart from the electro-optic layer 2 such that the first cladding layer $4_1$ is between the hybrid waveguide 5 and the electro-optic layer 2.

The hybrid waveguide 5 may be formed of a material with a higher or lower refractive index than the electro-optic layer 2. The material of the hybrid waveguide 5 could be any appropriate dielectric, polymer, or semiconductor material, such as silicon, Si, silicon nitride, SiN, and titanium dioxide, $TiO_2$. The first cladding layer $4_1$ may be formed of any suitable polymer or dielectric material with a refractive index lower than the refractive index of the hybrid waveguide 5. Suitable dielectric materials include silicon dioxide, $SiO_2$, doped-$SiO_2$, and silicon oxynitride, SiON, or any combinations thereof.

Other appropriate waveguide configurations include a strip-loaded waveguide (not shown), whereby a guiding layer is deposited and patterned on top of the electro-optic layer 2, usually but not necessarily without any intermediate layers. Others include a rib-etched waveguide (not shown) incorporated into the electro-optic layer 2, and a strip waveguide (not shown) incorporated into the electro-optic layer 2.

The first modulator $1_1$ further includes a substrate 6, onto which the first cladding layer $4_1$ is provided. The substrate 6 may be formed of silicon, sapphire, or fused silica.

The first modulator $1_1$ further comprises a pair of first electrodes 7, $7_1$. provided either directly or indirectly on the electro-optic layer 2. The pair of first electrodes $7_1$ are on the same side of the electro-optic layer 2 and are positioned such that the propagation path of the hybrid mode 3 is between them.

The pair of first electrodes $7_1$ are embedded in a second cladding layer 4, $4_2$, which may be formed of the same or similar material to the first cladding layer $4_1$.

Preferably, the pair of first electrodes $7_1$ are formed of aluminium, Al. However, other suitable metals may be used, such as gold, Au, silver, Ag, indium tin oxide, ITO, zinc oxide, ZnO, tungsten, W, or niobium, Nb. In other examples, the first electrodes $7_1$ may be formed of other sufficiently conductive materials. ITO electrodes $7_1$ can be used to further reduce the gap between the pair of electrodes $7_1$ compared to other suitable materials. Thus, ITO electrodes $7_1$ can improve the half-wave voltage ($V_{pi}$) of the modulator $1_1$ whilst maintaining low optical propagation loss.

Instead of the first electrodes $7_1$ having a conventional rectangular cross-section, the electrodes $7_1$ have a more complex cross-sectional shape, as will now be described. The plane of the cross-section of each first electrodes $7_1$ is perpendicular to the propagation path of the hybrid mode 3. Thus, in Figure 1, the cross-section of each electrode $7_1$ is in the x-y plane.

The confinement of the hybrid mode 3 in the electro-optic layer 2 may be such that the strength of the mode 3 decays more rapidly in the vertical direction compared to the horizontal direction (i.e. in the plane of the electro-optic layer 2). This is schematically shown in Figure 1 through the extent of confinement of the hybrid mode 3 being shown to extend laterally rather than vertically.

In view of this, each first electrodes $7_1$ has a cross-sectional shape which "wraps" around the hybrid mode 3 when supported in the electro-optical layer 2. The region of each electrode $7_1$ proximate to the electro-optic layer 2 is further from the propagation path of the hybrid mode 3 than the region(s) further from the electro-optic layer 3. The cross-sectional shape of the first electrodes $7_1$ mirror each other, meaning that each electrode $7_1$ "wraps" around a respective lateral side of the hybrid mode 3. Thus, as shown in Figure 1, the extent of the hybrid mode 3 does not overlap either first electrode $7_1$.

The cross-sectional shape of each first electrode $7_1$ will now be described in terms of a lower region 70, an angled region 71, and an elevated region 72. These regions of the first electrode $7_1$ do not differ in material composition, but merely refer to distinct aspects or regions of the shape of the cross-section. The regions 70, 71, 72 are separated by dashed lines in Figure 1.

The lower region 70 includes the region of the cross-sectional shape which directly or indirectly contacts the electro-optic layer 2. The technical advantages of directly contacting the electro-optic layer 2 may include a reduction in bias drift. The lower region 70 is the region closest to the electro-optic layer 2 compared to the angled and elevated regions 71, 72. The lateral length (in Figure 1, along the x axis) over which the lower region 70 directly/indirectly contacts the electro-optic layer 2 may be from 0.1 um to 200 um. The length over which the lower region 70 directly/indirectly contacts the electro-optic layer 2 extending along the propagation path (in Figure 1, along the z axis) may be from 0.2 mm to 20 mm.

The elevated region 72 does not contact the electro-optic layer 2. The elevated region 72 is positioned vertically above the lower region 70 (in Figure 1, along the y axis). At least a part of the elevated region is closer (in Figure 1, along the x axis) than the other regions 70, 71 to the propagation path of the hybrid mode 3.

The angled region 71 joins the lower region 70 and the elevated region 72 together such that the lower and elevated regions 70, 72 are electrically interconnected (in other words, these regions 70, 72 are at the same electric field potential when an external electrical signal is applied to any of the lower, angled, or elevated regions 70, 71, 72). As the elevated region 72 and the lower region 70 have different horizontal or lateral placement, the angled region 71 extends towards the propagation path (in figure 1, along the x axis) at an angle (herein "electrode angle"). The electrode angle, θ, is defined with respect to the electro-optic layer 2. This means that if the angled region 71 were to approach being parallel to the electro-optic layer 2, the electrode angle would approach 0°; if the angled region 71 were to approach being perpendicular to the electro-optic region 2, the electrode angle would approach 90°. The electrode angle may be up to 89°.

The angled region 71 may take any suitable shape. In the example shown in Figure 1, the cross-sectional shape in the angled region 71 has two straight edges, with one being angled 710 and one being vertical 711 (in Figure 1, along the 7 axis). The profile of the edges may be modified according to the method of formation of the modulator 1.

As shown in Figure 1, the electrode angle, θ, is defined as the angle of the angled edge 710 with respect to the electro-optic layer 2.

As hereinbefore described, the cross-sectional shape of the first electrodes $7_1$ mirror each other. This means that the elevated regions 72 are closer in the horizontal direction (in Figure 1, along the x axis) to each other than the lower regions 70.

The cross-sectional shape of the first electrodes $7_1$ is such that the electrodes $7_1$ can be brought closer together (specifically, their elevated regions 72 can be brought closer together) without increasing optical loss of the hybrid mode 3. This is because the lower regions 70 are still adequately separated in the lateral direction such that the hybrid mode 3 is not absorbed by the electrodes $7_1$. The improved proximity between the elevated regions 72 strengthens the electric field between these regions 72, which increases the intensity of the electric field intersecting the electro-optic layer 2.

The dimensions of each first electrode $7_1$ may be set or defined according to the effective area, $A_{eff}$, of the hybrid mode 3.

Approximating the hybrid mode 3 as a circular Gaussian distribution, the bottom spacing, s, between the pair of first electrodes $7_1$ may be defined as $s > 5w_{eff}$.

The bottom spacing, s, is the distance between the inner corners of the electrodes $7_2$, wherein the inner corners are where the electrodes $7_2$ directly/indirectly contact the electro-optic layer 2. The inner corners are within the lower regions 70. As used herein, the term "inner" is defined with respect to the propagation path. In Figure 1, the bottom spacing is the spacing between the vertical edges 711 measured along the x axis.

$w_{eff}$ is the effective width of the hybrid mode 3 and may be defined in equation (1) as:

$$ w_{eff} = 2\sqrt{\frac{A_{eff}}{2}} \quad (1) $$

As hereinbefore stated, $A_{eff}$ is the effective area of the hybrid mode 3. This may be defined in equation (2) as:

$$ A_{eff} = \frac{(\int |E|^2 \delta A)^2}{\int |E|^4 \delta A} \quad (2) $$

E is the electric field component of the hybrid mode 3.

In one example in which the electro-optic layer 2 is formed of thin film lithium niobate and has a thickness of 300 nm and the waveguide 5 is formed of silicon nitride and has a thickness of 350 nm, with an amount of 100 nm of the first cladding layer $4_1$ between the hybrid waveguide 5 and the electro-optic layer 2: $A_{eff}$ is in the order of 1 to 1.5 $um^2$ and, thus, $w_{eff}$ is in the order of 1.1 to 1.4 um. Therefore, the bottom spacing, s, should be approximately $\geq 7$ um to main optical loss of < dB/cm.

Again, approximating the hybrid mode 3 as a circular Gaussian distribution, the height of each first electrode, h, is defined in equation (3) as:

$$ h > \frac{w_{eff}}{3} \quad (3) $$

The height, h, of the electrodes $7_1$ is measured from the bottom (or base) of the lower region 70 to the bottom (or base) of the elevated region 72 along the vertical direction. In Figure 1, the height, h, is along the y axis. Each first electrode $7_1$ may have a height from 0.1 um to 2.0 um.

Each first electrode $7_1$ may have a thickness, t, (in Figure 1, along the y axis) from 0.7 um to 1.5 um. As used herein, the thickness of the electrodes $7_1$ is taken as the thickness of the non-angled regions of the electrodes

$7_1$ in the vertical direction (so in the present example, the lower region 70 and the elevated region 72). In some examples, the electrode thickness, t, and the electrode height, h, may be equal.

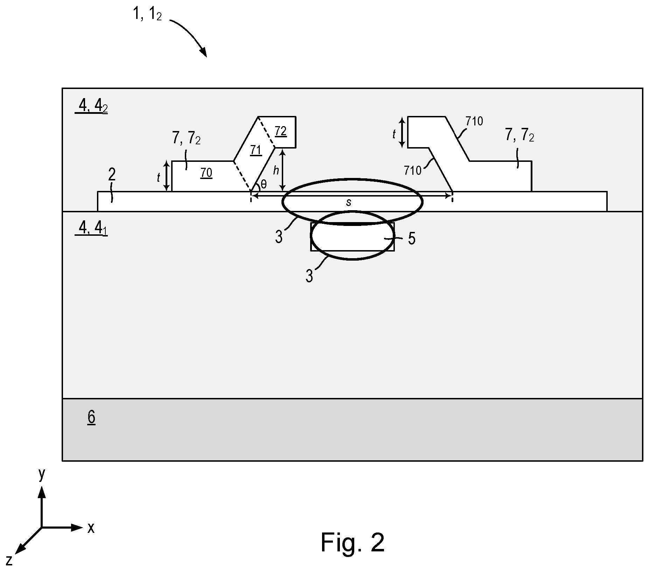

The extent of the hybrid mode 3 shown in Figure 1 (and in Figures 2, 3, and 4a described hereinafter) is merely schematic and is not depicted to scale with respect to the electrodes 7.

Referring now to Figure 2, a second hybrid electro-optic modulator 1, $1_2$ (herein "second modulator") will now be described. The second modulator $1_2$ is shown in Figure 2 in cross-section in the x-y plane.

The second modulator $1_2$ is the same as the first modulator $1_1$, aside from some design aspects of the electrodes 7. In particular, the second modulator $1_2$ comprises a pair of second electrodes 7, $7_2$ which differ in cross-sectional shape in the angled region 71 compared to the first electrodes $7_1$.

For each of the second electrodes $7_2$, the angled region 71 includes two angled edges 710 of the cross-sectional shape which are straight. As shown in Figure 2, the electrode angle, $\theta$, is defined as the angle of the lower angled edge 710 (i.e. closest to the electro-optic layer 2) with respect to the electro-optic layer 2.

In other examples, the angled edges 710 may be curved or stepped/have a staircase profile. In which cases, electrode angle, $\theta$, may be defined as the angle of a line defined by the lower angled edge 710 with respect to the electro-optic layer 2, wherein the line is drawn from the lowest point of the edge 710 to the highest point of the edge 710.

The height, h, thickness, t, and spacing, s, hereinbefore described are labelled in Figure 2 for the second electrodes $7_2$.

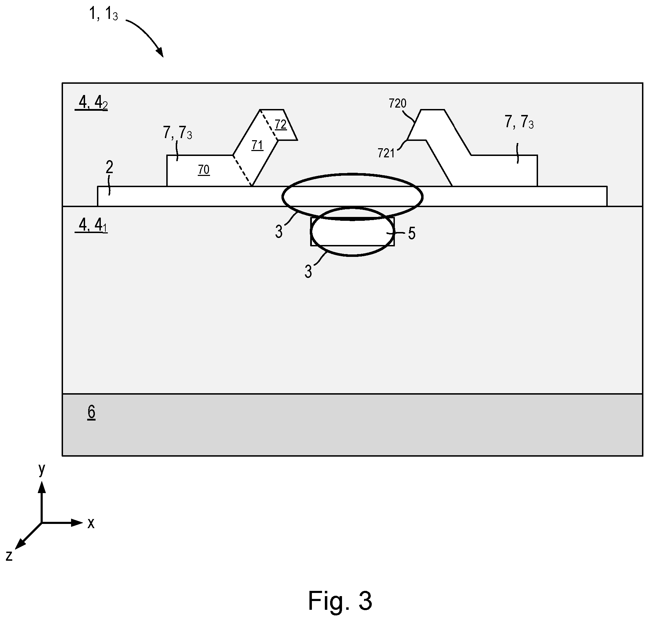

Referring now to Figure 3, a third hybrid electro-optic modulator 1, $1_3$ (herein "third modulator") will now be described. The third modulator $1_3$ is shown in Figure 3 in cross-section in the x-y plane.

The third modulator $1_3$ is the same as the second modulator $1_2$, aside from the design of the electrodes 7. In particular, the third modulator $1_3$ comprises a pair of third electrodes 7, $7_3$ which differ in cross-sectional shape in the elevated region 72 compared to the second electrodes $7_2$.

For each of the third electrodes $7_3$, the elevated region 72 includes an edge 720 of the cross-sectional shape which faces towards the opposite second electrode $7_2$ (herein "elevated edge"). This elevated edge 720 is closest to the mode propagation of the hybrid mode 3 in the horizontal direction (in Figure 2, along the x axis) compared to the other edges of the elevated region 72.

The elevated edge 720 is bevelled so as to form a point 721. The points 721, which may help to amplify the electric field strength, can be brought into closer proximity to the hybrid mode 3 via the vertical direction (in Figure 3, along the y axis), which is the direction in which the decay of the hybrid mode 3 is less sensitive to fabrication variations. In some configurations of the hybrid waveguide 5, the hybrid mode 3 decays more rapidly in the vertical direction. Preferably, the angle formed by the point 721 may be minimised to further enhance the electric field strength.

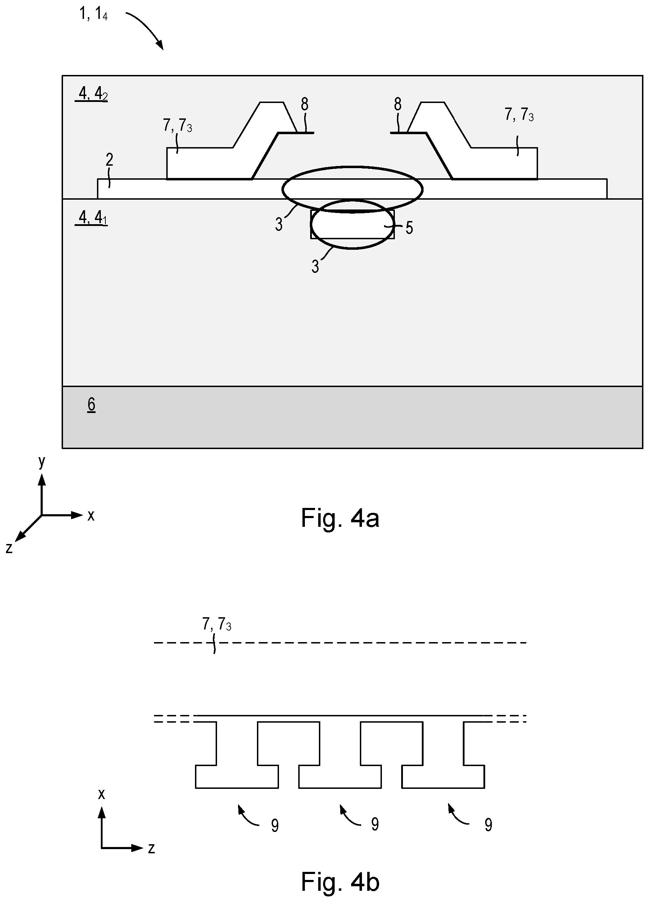

Referring now to Figure 4a, a fourth hybrid electro-optic modulator 1, $1_4$ (herein "fourth modulator") will now be described. The fourth modulator $1_4$ is shown in Figure 4 in cross-section in the x-y plane.

The fourth modulator $1_4$ is the same as the third modulator $1_3$, but further comprises an electrode layer 8 between each third electrode $7_3$ and the electro-optic layer 2. Thus, two electrode layers 8 are present in the fourth modulator $1_4$.

Each electrode layer 8 conforms to the profile of the cross-section shape of its respective third electrode $7_3$. In other words, the electrode layer 8 directly contacts the third electrode 8 along the underside of the lower region 70, angled region 71, and elevated region 72. The electrode layer 8 may protrude beyond the elevated region 72 in the horizontal direction (in Figure 4a, along the x direction), as shown in Figure 4a.

Preferably, each electrode layer 8 may be formed of titanium nitride, TiN. In other examples, each electrode layer 8 may be formed of a transparent conductive oxide, TCO. This class of material can be used to further reduce the distance between the electrodes $7_3$ and the electro-optic layer 2; this is because the optical losses related to TCOs are lower than those associated with typical metals. Typical TCO materials from which the electrode layers 8 may be formed are (but not limited to) hydrogenated indium oxide, IO:H, indium tungsten oxide, IWO, aluminium doped zinc oxide, AZO, boron doped zinc oxide, BZO, indium zinc oxide, IZO, and alloys thereof. These materials can be deposited with a variety of techniques, such as direct current (DC)/radio frequency (RF) sputtering or low-pressure chemical vapor deposition (CVD).

In some examples, the doping level of the TCO electrode layers 8 may be adjusted to minimise the optical absorption losses at the optical signal operation wavelength of interest. This can help to reduce the distance between the electrode layers 8 and the electro-optic layer 2, for example to 100 nm or below.

In some examples, one or more intermediary layers (not shown) are present between the electrode layers 8 and the electro-optic layer 2. In other preferred examples, the electrode layers 8, for example the TCO electrode layers 8, may be placed in direct contact with the electro-optical layer 2. This positioning can allow the electrodes $7_3$ to produce higher or the highest possible electrical field intensity when in close proximity to the optical mode 3.

In some examples, each electrode layer 8 protruding from the underside of a respective third electrode $7_3$ may comprise two rows of protruding tips 9 (Figure 4b), each row extending horizontally in opposite directions along the direction along which the pair of third electrodes $7_3$ are spaced apart from each other (in Figure 4a, along the x axis). The tips 9 protrude from the underside of the third electrodes $7_3$.

Referring also to Figure 4b, an aerial view (in the x-z plane) of a section of the third electrode $7_3$ and electrode layer 8 is shown. Figure 4b shows a section of a single row of tips 9. In a preferred example, each tip 9 forms a T-shape in the x-z plane.

The electrode layers 8 may help to enhance the electric field and may be optimized for tuning the high-frequency properties (e.g. phase velocity) of radio frequency (RF) modes.

Although described with respect to the fourth modulator $1_4$, the electrode layers 8 may be incorporated into any modulator 1 according to the present application, including the specific examples hereinbefore described.

The presence of the electrode layers 8 may help to provide more control over the properties (e.g. wave velocity, impedance, and RF attenuation) of the RF field of the electrodes 7 at high frequencies.

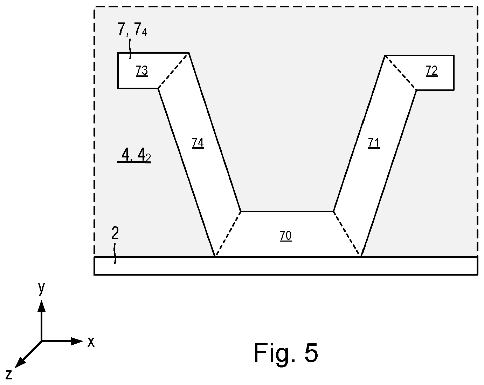

Referring now to Figure 5, a fourth electrode $7_4$ will now be described. A pair of fourth electrodes $7_4$ may be incorporated into any modulator 1 according to the present application, including the specific examples hereinbefore described, in place of the pair of first, second, or third electrodes 7.

Figure 5 shows a subsection of the modulator 1, and omits certain features for ease of illustration.

In addition to the lower, angled, and elevated regions 70, 71, 72 hereinbefore described, the cross-sectional shape of the fourth electrode $7_4$ further comprises an additional elevated region 73 joined to the lower region 70 via an additional angled region 74.

The additional elevated region 73 is further from the propagation path in the horizontal direction than the elevated region 72 hereinbefore described. Thus, the additional angled region 74 extends away from the propagation path along the horizontal direction (in Figure 5, along the x axis).

As shown in Figure 5, the additional angled and elevated regions 74, 73 mirror the angled and elevated regions 71, 72 hereinbefore described along the z-axis. In other words, the fourth electrode $7_4$ forms substantially a V-shape.

In some examples, a mix of electrode 7 of different designs may be incorporated into the same modulator 1.

Method of formation

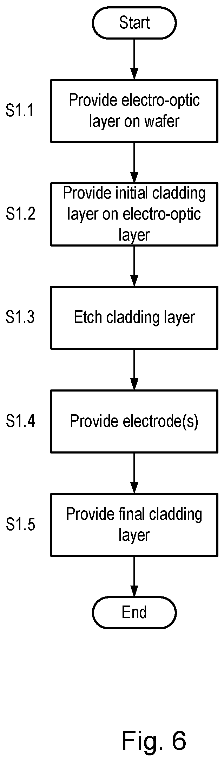

Referring now to Figure 6, a method of forming the hybrid electro-optic modulator 1 according to the present application will now be described.

Without wishing to be bound by theory, not having direct contact between the electro-optic layer 2 and the electrodes 7/electrode layer 8 can reduce the efficiency of the modulation due to the bias drift effect. However, directly depositing the electrodes 7 on the electro-optic layer 2 can leave metallic residue on the layer 2, which can cause high optical losses through absorption and scattering.

In view of the above, the present method prevents or reduces metallic residue on the electro-optic layer 2 whilst enabling direct contact between the electro-optical layer 2 and the electrodes 7 (or the electrode layer 8, if present) after formation. This is done by patterning a cladding layer (hereinafter described) prior to the metal deposition step.

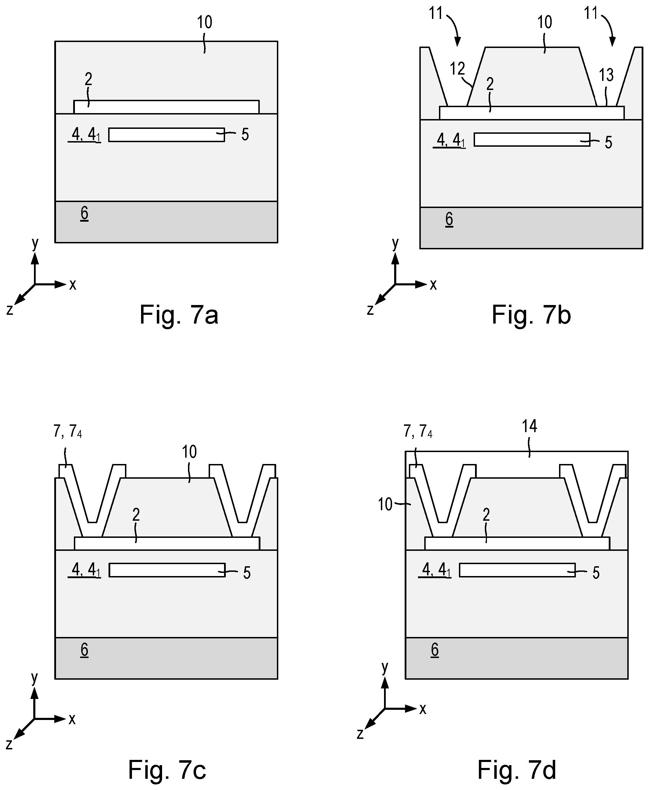

For ease of illustration, the method will now be described with reference to a specific example of the modulator 1 in which the fourth electrodes $7_4$ are formed. The method is described with reference to Figure 7a to 7d.

First, an electro-optic material is provided on a wafer to form the electro-optical layer 2 (step S1.1). The wafer includes the substrate 6, first cladding layer $4_1$, and a suitable waveguide configuration, for example the hybrid waveguide 5 hereinbefore described.

Next, an initial cladding layer 10 is provided on the electro-optic layer 2 (step S1.2). This is shown in Figure 7a.

The initial cladding layer 10 is then etched to form holes 11 (step S1.3); these holes 11 are shown in Figure 7b.

The holes 11 are etched into the top surface of the initial cladding layer 10. As illustrated, each hole 11 has angled side walls 12 and exposes a region 13 of the electro-optic layer 2. In Figures 7a to 7d, the side walls 12 are angled within the x-y plane; each hole extends along the z direction by a length set according to the desired shape of the electrodes 7.

The angled side walls 12 can be straight or have some other profile (e.g. curved), have a staircase profile, or a combination thereof. The profile of the angled side walls 12 is selected according to the desired cross-sectional shape of the electrodes 7 to be formed. The desired cross-sectional shape may depend on the shape of the optical mode 3. The holes 11 can be formed by dry or wet chemical or physical etching techniques, and they can be defined in one or more lithographic steps.

Preferably, a single lithographic step is performed in step S1.3 to reduce process complexity. However, even when a single mask and lithography step is used, the etching process of step S1.3 may still consist of multiple steps with different etching methods or parameters. Thus, the profile/shape of the side walls 12 can be tuned using different etching methods and/or parameters but with the same mask. In preferred examples, the number of steps in the etching process of step S1.3 is minimized to reduce process complexity.

In a preferred example, a single lithographic mask is used to define angled side walls 12 with straight walls. In other examples, a staircase profile of the side walls 12 can be created, for example by using grayscale lithography, by a thermal reflow process, or by ion beam etching. Etching can also be used by increasing the amount of side wall 12 polymerization during the etching process and/or reducing the vertical etching of the initial cladding layer. Etching can also be used in combination with grayscale lithography.

If an etching process is used in step S1.3, the final stage of the etching process may be selected according to the material used in the electro-optic layer 2. If the final stage is omitted, an etch stop layer can be used between electro-optic layer 2 and the initial cladding layer 10.

Next, the electrodes 7 are provided or formed for each hole 11 (step S1.4).

The electrodes 7 are provided within the holes 11 so as to directly contact at least one of the side walls 12 and the exposed region 13 of the electro-optic layer 2. In the present example shown in Figure 7c, the electrode 7 directly contacts both angled side walls 12. Each electrode 7 also directly contacts the surface of the initial cladding layer 10 proximate to the hole 11, as shown in Figure 7c.

In other examples, each electrode 7 may not directly contact the angled side wall(s) 12, exposed region 12, and the initial cladding 10 proximate to the hole 11.

The electrodes 7 may be provided using a variety of techniques or a combination thereof. The technique(s) selected may depend on the material used. For example, the electrodes 7 may be provided using either the lift-off method, the deposition and patterned etch method, or using the Damascene method, or a combination thereof. These methods will be described hereinafter.

Optionally, the electrode layer 8 hereinbefore described may be provided or formed for each hole during step S1.4. In which case, the electrode layer 8 may directly contact the angled side wall(s) 12, exposed region 12, and the initial cladding 10 proximate to the hole 11 instead of the electrode 7.

The material for the electrode layers 8 is deposited prior to the material for the electrodes 7. The electrode layers 8 may be provided using a variety of techniques or a combination thereof, which may depend on the material used for the electrode layers 8. The electrode layers 8 and electrodes 7 may be formed as part of the same set of processing steps, as will be described in more detail hereinafter.

Lastly, a final cladding layer 14 is provided on the electrodes 7 and the exposed surface of the initial cladding layer 10 (steps S1.5). This is shown in Figure 7d.

The final cladding layer 14 may be the same material or different material to the initial cladding layer 10. The final cladding layer 14 may be deposited in the same or a different way compared to the initial cladding layer 10. The final cladding layer 14 and the initial cladding layer 10 in combination correspond to the second cladding layer $4_2$ hereinbefore described.

Methods of forming the modulator 1 according to the present application will now be described in greater detail.

In examples in which the electrodes 7 are formed of aluminium, it is preferable to use the deposition and patterned etch method in step S1.4. Firstly, a metal underlayer is applied to the electro-optic layer 2. The metal underlayer functions as a diffusion barrier and adhesive layer for the aluminium. Once deposited on the metal underlayer, the aluminium is etched selectively against the metal underlayer using both dry and wet etching. Preferably, the metal underlayer is formed of titanium nitride, TiN. In some examples, the metal underlayer may be the electrode layer 8.

In examples in which the electrodes 7 are formed of more chemically inert materials, such as gold or silver, it is preferable to use the lift-off method in which the material for the electrodes 7 is deposited directionally, rather than conformally.

As hereinbefore explained, in some examples, the Damascene method is performed in step S1.4. An example of the Damascene method will now be described.

First, a polymer is deposited onto the top of the modulator 1 being formed (in other words, onto the etched initial cladding layer 10 and the exposed regions 13 of the electro-optic layer 2) to form a polymer film. The polymer is deposited using either spin-coating or spray-coating, or evaporation or chemical vapour deposition. The polymer may be benzocyclobutene, BCB, poly(methyl methacrylate), PMMA, parylene, Mylar or a similar polymer.

Next, the polymer film is planarized. Methods of planarization include mechanical polishing or etch-back techniques and/or combinations thereof.

Next, the polymer film is etched to match the distribution of the holes 11 in the initial cladding layer 10. In other words, the polymer film is etched such that the regions 13 of the electro-optic layer 2 hereinbefore referred to in step S1.3 are re-exposed.

Next, a metallic seed layer is deposited by e-beam evaporation or sputtering, or chemical vapor deposition or atomic layer deposition. The metallic seed layer may be formed of titanium nitride, TiN, tantalum nitride, TaN, tungsten nitride, WN, aluminum nitride, AlN, or tertiary combinations, such as aluminium titanium nitride, AlTiN, aluminium tantalum nitride, AlTaN, or aluminium tungsten nitride, AlWN. Other suitable metals may be used, provided that they are capable of functioning as a diffusion barrier for metallic ions, such as Cu+, Li+, K+, gold ions, and silver ions.

Next, the electrodes 7 are formed and, optionally, additional electric routing. This can be done in several ways, two of which will now be described.

In some examples, the metal seed layer is coated with a photoresist suitable for electroplating. This photoresist is patterned such that regions devoid of this resist will become regions of electric routing and the electrodes 7.

Then, electroplating of a suitable metallic material (such as gold, copper, nickel and/or combinations thereof) is performed. This results in the growth of high electrical conductivity metal (where the photoresist is not exposed) to form the electrodes 7, and optionally, the additional electric routing, such as metallic pads outside the holes.

Typically, this is done to provide routing for electrical signals between locations far from the modulator 1 and within the modulator 1. For instance, electrical signals may be routed between electrical pads outside the modulator 1 and electrical radio frequency drivers within the modulator 1.

Preferably, the electric routing is engineered to operate at high frequencies, such as above 1GHz, or above 200GHz. This means that the thickness of the electroplated metal layer (e.g. the gold or copper layer) is deposited to allow for a suitable electrical impedance with low resistivity. The metal layer deposited during electroplating follows the profile of the angled sidewall of the hole (provided the photoresist does not cover the sidewall).

Next, the photoresist may be removed (e.g. by ashing or solvents, or a combination thereof) or left within the modulator 1.

In other examples, a photoresist is not used to form the electrodes 7 and the additional electric routing. Instead, the metallic material is electroplated onto the metallic seed layer. In such cases, the polymer layer will have previously been patterned to match the electrodes 7 and the additional electric routing.

Next, the electroplated metal is polished via a chemical mechanical polishing step. After this step, the remaining metal will follow the electric routing between electrical pads on the modulator 1 and will also form the electrodes 7 with a metallic seed (e.g. TiN) layer. As hereinbefore described, the electrodes 7 will follow the profile defined by the etched initial cladding layer.

Once the electrodes 7 are formed and, optionally, additional electric routing, a top barrier layer may be deposited so as to fully encapsulate the high conductivity metal. The top barrier layer may be formed of TiN, TaN, WN or any suitable barrier layer material combination. This is done to avoid fast diffusion ions present in the metal out-diffusing into the cladding, the electro-optic layer 2, and/or the polymer layer. Out-diffusion can generate plasmonic losses for the optical signals.

Next, the metallic seed layer is removed from regions outside the electric routing and electrodes 7. This can be done by either an additional dedicated lithography step or by a self-aligned process, such as selectively dry or wet etching or conformal deposition.

Finally, the electric routing is cladded, but with the pad locations exposed to allow for wire-bonding to an external printed circuit board and/or computer electronics. This may be performed after step S1.5

In some examples of the Damascene process, the polymer layer may not be present.

In some examples of the Damascene process, the metallic seed layer may be the electrode layer 8.

Alternative methods of forming the electrodes 7 and electrode layers 8 in step S1.4 will now be described.

In examples in which the electrodes 7 are formed of AlCu and the electrode layers 8 are formed of TiN, the following method steps may be performed: First, the TiN is deposited on the first cladding layer $4_1$, followed by deposition of the AlCu layer. The TiN layer may have a thickness of 30 nm and the AlCu layer may have a thickness of 1 um.

Then, a photolithographic step is performed followed by vertical etching of both the TiN and AlCu layers to define their shapes.

Next, selective etching of the AlCu layer is performed to remove the AlCu material from overlapping the tips 9 of the TiN layer. This selective etching may be done with ammonia: hydrogen peroxide-based solutions, which are known to etch aluminium without removing TiN.

Optionally, a further photolithographic step is performed immediately preceding the selective etching to protect the AlCu layer during etching.

These method steps may also be performed when the electrode layers 8 are formed of gold.

In other examples, it may be preferable for the electrodes 7 and the electrode layers 8 to both be formed of gold (or another suitable high conductivity metal, such as copper). For example, gold may be used to help reduce the RF resistance and to allow for very high-speed RF signals (100 GHz and above). In such cases, it may be suitable to include a thin inter-metal layer, for example formed of TiN, in between each electrode 7 and electrode layer 8 to allow for selectivity to be exploited. The following method steps may be performed:
First, the Au layer for the electrode layers 8 is deposited on the first cladding layer $4_1$, followed by deposition of the TiN interlayer and a further Au layer for the electrodes 7. Preferably, the Au layer for the electrodes 7 has a thickness of 1 um.

Next, the Au layer for the electrodes 7 is etched using aqua regia. This etch will stop at the TiN interlayer due to the material selectivity. Then, the TiN interlayer is patterned by lithography and vertical etch steps in a plasma reactor. Finally, the Au layer for the electrode layers 8 are etched using an aqua regia etch for a short etching time, such as 1 second.

Simulation data

The electrodes 7 according to the present application can provide enhancement of the electric field without increasing absorption of the hybrid mode 3 by the electrodes 7. The proximity between the elevated regions 72 of opposite electrodes 7 can be increased whilst the lower regions 70 can remain separated.

Furthermore, the cross-sectional shape of the electrodes 7 can help to increase the radio frequency (RF) wave velocity of the electric field (so as to match that of the optical field) and reduce the RF loss by "pulling" the RF field further away from the substrate 6.

These technical advantages are illustrated by simulation data, which will now be described.

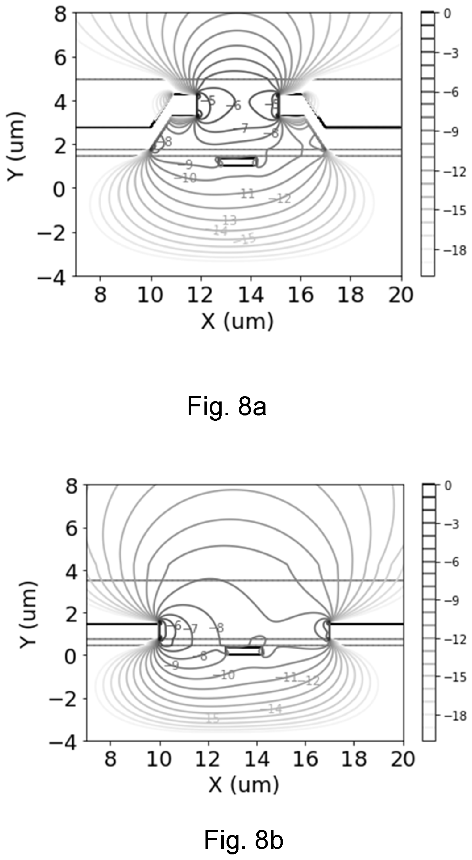

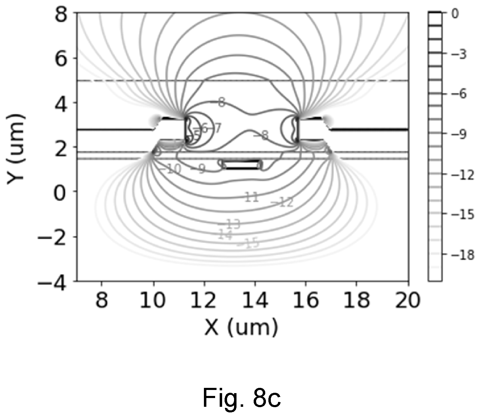

Referring to Figure 8a, a simulation of the RF field of a pair of the second electrodes 7, $7_2$ is shown. Referring also to Figure 8b, a simulation of the RF field for a pair of conventional electrodes (which have a rectangular cross-section) is shown. Referring also to Figure 8c, a simulation of the RF field of a pair of the second electrodes 7, $7_2$ is shown; the dimensions of the second electrodes $7_2$ in Figure 8c differ compared to Figure 8a, as will be hereinafter explained.

For each of Figures 8a to 8c, the strength or intensity of the RF field is indicated by the shading of the field lines. The scale next to each RF field simulation indicates the RF field magnitude in dB for different shadings.

The details of the modulators used in the simulations of Figures 8a, 8b, and 8c will now be described. Each modulator includes the hybrid waveguide 5 hereinbefore described.

For Figures 8a, 8b, and 8c, the electro-optic layer 2 is formed of lithium niobate and has a thickness of 300 nm. The width (as measured along the x axis) of the hybrid waveguide 5 is 1.5 um and has a thickness (as measured along the y axis) of 0.35 um. The thickness of the first cladding layer 4, $4_1$ is 3.5 $\mu$m and the thickness of the second cladding layer 4, $4_2$ is 5 um. The electro-optic layer 2 and the hybrid waveguide 5 are spaced apart by 0.1 um such that the first cladding layer $4_1$ is therebetween.

For the plots in Figures 8a and 8c, the electrode angle, $\theta$, of each second electrode $7_2$ is 60°. The spacing between the inner corners of the pair of second electrodes 7, $7_2$ where they are in contact with electro-optic layer 2 is 7 um.

In Figure 8a, the height of the second electrodes $7_2$ is 1.5 um (measured from the bottom of the lower region 70 to the bottom of the elevated region 70), whereas in Figure 8c the height is 0.5 um. In both Figures 8a and 8c, the width of the elevated regions 72 are 1 um. For the second electrodes $7_2$, the width of an elevated region 72 is measured between the top corners of the region 72.

As shown in Figures 8a and 8b, the RF field is enhanced between the elevated regions 72 of the second electrodes $7_2$ compared to between the rectangular electrodes. The RF field is also weaker within the first cladding layer $4_1$ (towards the substrate 8) in Figure 8a compared to Figure 8b.

As hereinbefore mentioned, the second electrodes $7_2$ of Figure 8c have different dimensions to the second electrodes $7_2$ of Figure 8a. Specifically, the bottom of the elevated regions 72 of the second electrodes $7_2$ of Figure 8c are 0.5 um above the electro-optic layer 2, whereas the bottom of the elevated regions 72 of the second electrodes $7_2$ of Figure 8a are 1.5 um above the electro-optic layer 2. However, the same technical advantages can be observed. Namely, the RF field is enhanced between the elevated regions 72 of the second electrodes $7_2$ in Figure 8c and the RF field is weaker towards the substrate 8 when compared to the RF field in Figure 8b.

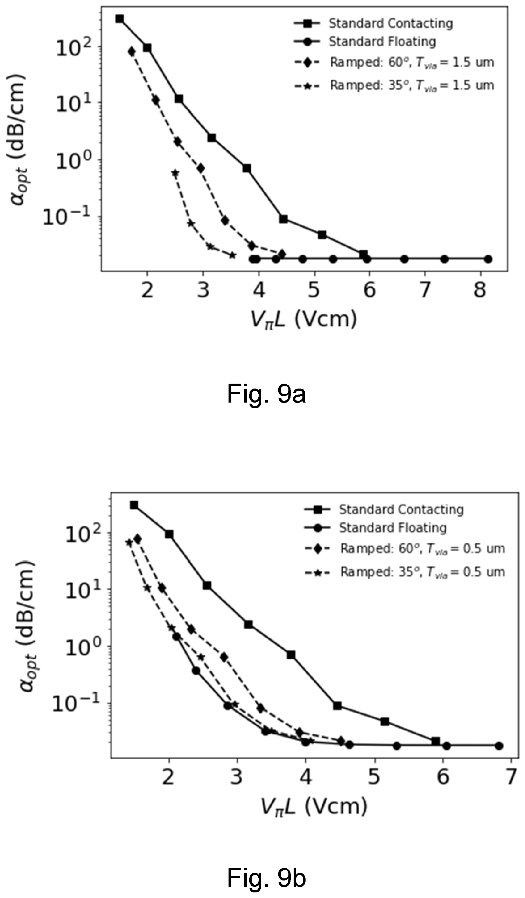

Referring now to Figure 9a, simulation plots of optical loss ($\alpha_{opt}$) of the hybrid mode 3 (due to the mode 3 interacting with the electrodes 7) against half-wave voltage-length product (VnL) for several modulators having conventional electrodes and electrodes 7 according to the present application are shown.

The plot "Standard Contacting" (solid square line) refers to an example in which a modulator has conventional rectangular electrodes on thin film lithium niobate, similar to the cross-section shown in Figure 8b. The plot "Standard Floating" (solid circle line) refers to an example in which a modulator has conventional rectangular electrodes on a first cladding layer $4_1$ of thickness 1.5 um. The plot "Ramped: 60°, Tvia = 1.5 um" (dashed diamond line) refers to an example modulator 1 according to the present application having second electrodes $7_2$ angled at 60°. The plot "Ramped: 35°, Tvia = 1.5 um" (dashed star line) refers to an example modulator 1 according to the present application having second electrodes $7_2$ angled at 35°. The notation "Tvia" refers to the height of the electrodes $7_2$.

As shown in Figure 9a, $\alpha_{opt}$ reduces more rapidly with increased VnL for the modulators 1 according to the present application compared to the conventional modulators.

The simulation in Figure 9a illustrates how the modulator 1 according to the present application can be a more efficient modulator (decreased VnL) while maintaining low optical loss per length. The "Standard Floating" modulator results in the lowest overall $\alpha_{opt}$ per VnL due to the electrodes being separated from the hybrid mode 3 by 1.5 $\mu$m of cladding. However, the electrodes of this example do not directly contact the electro-optic layer 2, which can lead to bias drift effects which can reduce modulator efficiency and reliability.

Referring also to Figure 9b, simulation plots of $\alpha_{opt}$ of the hybrid mode 3 against VnL for several modulators having conventional electrodes and electrodes 7 according to the present application are shown.

The plot "Standard Floating" (solid circle line) refers to an example in which a modulator has conventional rectangular electrodes on a first cladding layer 4, $4_1$ of thickness 0.5 um. The plot "Ramped: 60°, Tvia = 0.5 um" (dashed diamond line) refers to an example modulator 1 according to the present application having electrodes $7_2$ angled at 60°. The plot "Ramped: 35°, Tvia = 0.5 um" (dashed star line) refers to an example modulator 1 according to the present application having electrodes $7_2$ angled at 35°.

In Figure 9b, the modulators 1 according to the present application are more efficient than the "Standard Contacting" modulator. While the "Standard Floating" modulator results in similar $\alpha_{opt}$ per VnL as the example modulators 1 in Figure 9b, the "Standard Floating" modulator produces bias drift effects due to its electrodes not directly contacting the electro-optic layer 2.

The simulation results displayed in Figures 9a and 9b apply to the same hybrid waveguide 5 of Figures 8a to 8c. In all of these Figures, the top of the first cladding layer $4_1$ lies 100 nm above the top of the hybrid waveguide 5. The hybrid waveguide 5 has a width of 1.5 um and a thickness of 350 nm. The thickness of the electro-optic layer 2 is 300 nm. The simulated geometries in Figures 8a and 8c, as well as the simulation results "Ramped: 60°, Tvia = 1.5 um" and "Ramped: 35°, Tvia = 1.5 um" in Figure 9a and "Ramped: 60°, Tvia = 0.5 um" and "Ramped: 35°, Tvia = 0.5 um" in Figure 9b are of the same geometry type as that illustrated in Figure 2.

Modifications

It will be appreciated that various modifications may be made to the embodiments hereinbefore described. Such modifications may involve equivalent and other features which are already known. Features of one embodiment may be replaced or supplemented by features of another embodiment.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicant hereby gives notice that new claims may be formulated to such features and/or combinations of such features during the prosecution of the present application or of any further application derived therefrom.

**Claims**

1. A hybrid electro-optic modulator comprising:

   an electro-optic layer configured to support a hybrid mode propagating in a first direction;
   a pair of electrodes spaced apart in a second direction perpendicular to the first direction, the electrodes being positioned on the same side of the electro-optic layer and between the propagation path of the hybrid mode;
   wherein each electrode has a cross-sectional shape in a plane defined by the second direction and a third direction perpendicular to the first and second directions, the cross-sectional shape including a lower region joined to an elevated region via an angled region;
   wherein:

   the lower region is closer to the electro-optic layer than the elevated region in the third direction;
   the angled region extends towards the propagation path of the hybrid mode in the second direction; and
   the pair of elevated regions are closer than the pair of lower regions in the second direction.

2. The hybrid electro-optic modulator of claim 1, wherein the lower region directly contacts the electro-optic layer.

3. The hybrid electro-optic modulator of claim 1, wherein the modulator further comprises:
   an electrode layer provided between each electrode and the electro-optic layer, wherein the electrode layer conforms to the profile of the cross-sectional shape.

4. The hybrid electro-optic modulator of claim 3, wherein the electrode layer comprises two rows of tips, one row extending along the second direction and the other row extending opposite to the second direction.

5. The electro-optic modulator of claims 3 or 4, wherein the electrode layer is formed of titanium nitride, TiN.

6. The electro-optic modulator of claims 3 or 4, wherein the electrode layer is formed of a transparent conductive oxide.

7. **The electro-optic** modulator of claim 6, wherein the transparent conductive oxide is hydrogenated indium oxide, IO:H, indium tungsten oxide, IWO, aluminium doped zinc oxide, AZO, boron doped zinc oxide, BZO, or indium zinc oxide, IZO, or alloys thereof.

8. The electro-optic modulator of any preceding claim, wherein the electro-optic layer is formed of lithium niobate.

9. The hybrid electro-optic modulator of claim 8, wherein the lithium niobate is in the X-cut orientation.

10. The hybrid electro-optic modulator of any preceding claim, wherein the pair of electrodes are formed of aluminium, gold, silver, indium tin oxide, zinc oxide, tungsten, or niobium.

11. The hybrid electro-optic modulator of any preceding claim, wherein the spacing between the lower regions of the pair of electrodes is set according to the effective area, $A_{eff}$, of the hybrid mode.

12. The hybrid electro-optic modulator of any preceding claim, wherein each electrode has a thickness from 0.7 um to 1.5 um.

13. The hybrid electro-optic modulator of any preceding claim, wherein the height of each electrode is set according to the effective area, $A_{eff}$, of the hybrid mode, wherein the height is measured from the bottom of the lower region to the bottom of the elevated region along the third direction.

14. The hybrid electro-optic modulator of any preceding claim, wherein each electrode has a height from 0.1 um to 2.0 um.

15. The hybrid electro-optic modulator of any preceding claim, wherein the lower region extends across the electro-optic layer over a length in the second direction from 0.1 um to 200 um and over a length in the first direction from 0.2 mm to 20 mm.

16. The hybrid electro-optic modulator of any preceding claim, wherein the angled region is a first angled region and the elevated region is a first elevated region, the cross-sectional shape further comprises: a second elevated region joined to the lower region via a second angled region, wherein the second angled region extends away from the propagation path of the hybrid mode in the second direction.

17. The hybrid electro-optic modulator of any preceding claim, wherein the angled region has two angled edges, each angled edge having a straight, curved, or stepped profile.

18. The hybrid electro-optic modulator of any preceding claim, wherein the angled region is angled with respect to the electro-optic layer by up to 89°.

19. The hybrid electro-optic modulator of any preceding claim, wherein each elevated region includes a side of the cross-sectional shape which has a bevelled profile and faces the other elevated region.

20. A method of forming a hybrid electro-optic modulator, the method comprising:

   providing an electro-optic layer on a wafer;
   providing an initial cladding layer on the electro-optic layer;
   etching the initial cladding layer to form one or more holes, each hole having two angled side walls and exposing a region of the electro-optic layer;
   forming an electrode in each hole such that the electrode overlays at least one angled side wall, the exposed region of the electro-optic layer, and a region of the first cladding layer surrounding the hole; and

providing a final cladding layer on the electrode(s) and the initial cladding layer.

21. The method of claim 20, wherein the electrode directly contacts at least one angled side wall, the exposed region of the electro-optic layer, and the region of the first cladding layer surrounding the hole.

22. The method of claim 20, wherein an electrode layer is formed with the electrode or immediately prior to forming the electrode in each hole.

23. The method of any one of claims 20 to 22, wherein the initial cladding layer is etched using a single lithographic mask.

24. The method of any one of claims 20 to 23, wherein each angled side wall may have a straight, curved, or stepped profile.

25. The method of any one of claims 20 to 24, wherein the electrodes may be formed using the lift-off method or the Damascene method.

Fig. 1

Fig. 2

Fig. 3

Fig. 4a

Fig. 4b

Fig. 5

```
                    ┌──────────────┐
                    │    Start     │
                    └──────┬───────┘
                           │
                           ▼
        ┌──────────────────────────────────┐
S1.1    │  Provide electro-optic           │
        │  layer on wafer                  │
        └──────────────┬───────────────────┘
                       │
                       ▼
        ┌──────────────────────────────────┐
        │  Provide initial cladding        │
S1.2    │  layer on electro-optic          │
        │  layer                           │
        └──────────────┬───────────────────┘
                       │
                       ▼
        ┌──────────────────────────────────┐
S1.3    │  Etch cladding layer             │
        └──────────────┬───────────────────┘
                       │
                       ▼
        ┌──────────────────────────────────┐
S1.4    │  Provide electrode(s)            │
        └──────────────┬───────────────────┘
                       │
                       ▼
        ┌──────────────────────────────────┐
S1.5    │  Provide final cladding          │
        │  layer                           │
        └──────────────┬───────────────────┘
                       │
                       ▼
                ┌──────────────┐
                │     End      │
                └──────────────┘
```

Fig. 6

Fig. 7a

Fig. 7b

Fig. 7c

Fig. 7d

Fig. 8a

Fig. 8b

Fig. 8c

Fig. 9a

Fig. 9b

**EUROPEAN SEARCH REPORT**

Application Number

EP 25 20 6157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/251511 A1 (KHAREL PRASHANTA [US] ET AL) 10 August 2023 (2023-08-10) * paragraphs [0049], [0052], [0054], [0063], [0150], [0157], [0159], [0171], [0173], [0174]; figures 1B, 27A-27B, 28,32A-32B * ----- | 1-17,20, 21 | INV. G02F1/03 G02F1/035 G02F1/225 |
| X | CN 117 826 456 A (ZTE PHOTOELECTRIC TECH CO LTD) 5 April 2024 (2024-04-05) * figures 2,3 * ----- | 1,20 | |
| X | CN 116 400 522 A (INST SEMICONDUCTORS CAS) 7 July 2023 (2023-07-07) * figure 2 * ----- | 1,20 | |

**TECHNICAL FIELDS SEARCHED (IPC)**

G02F

The present search report has been drawn up for all claims

| Place of search | Date of completion of the search | Examiner |
|---|---|---|
| The Hague | 9 June 2026 | Ladiray, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6157

This annex lists the patent family members relating to the patent documents cited in  the above-mentioned European search report.
The members are as contained in the European Patent Office EDP file on
The European Patent Office is in no way liable for these particulars which are merely given for the purpose of information.

09-06-2026

| Patent document<br>cited in search report | Publication<br>date | Patent family<br>member(s) | | Publication<br>date |
|---|---|---|---|---|
| US 2023251511 A1 | 10-08-2023 | NONE | | |
| CN 117826456 A | 05-04-2024 | CN | 117826456 A | 05-04-2024 |
| | | WO | 2024066678 A1 | 04-04-2024 |
| CN 116400522 A | 07-07-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEIGEL, P. O** ; **VALDEZ, F.** ; **ZHAO, J.** ; **LI, H** ; **MOOKHERJEA, S**. Design of high-bandwidth, low-voltage and low-loss hybrid lithium niobate electro-optic modulators.. *Journal of Physics: Photonics*, 2021, vol. 3 (1), 012001